## Europäisches Patentamt
## European Patent Office
## Office européen des brevets

(11) Numéro de publication : **0 015 201**
**B1**

(12) **FASCICULE DE BREVET EUROPÉEN**

(45) Date de publication du fascicule du brevet :
**11.05.83**

(51) Int. Cl.³ : **B 60 J 5/04**, B 62 D 29/04

(21) Numéro de dépôt : **80400222.8**

(22) Date de dépôt : **15.02.80**

(54) **Porte pour véhicule, notamment pour automobile.**

(30) Priorité : **19.02.79 FR 7904164**

(43) Date de publication de la demande :
**03.09.80 Bulletin 80/18**

(45) Mention de la délivrance du brevet :
**11.05.83 Bulletin 83/19**

(84) Etats contractants désignés :
**DE GB IT**

(56) Documents cités :
**DE A 914 711**
**DE A 1 923 943**
**FR A 854 141**
**FR A 1 417 185**
**FR A 2 151 335**
**FR A 2 397 951**
**US A 3 850 474**
**PRODUCT ENGINEERING, vol. 47, no. 4 ; avril 1976 « New sheet molding compounds promise higher strength, easier processing », pages 35-37.**
**PRODUCT ENGINEERING, vol. 48, no. 1, janvier 1977 « Fiberglass doors could cut auto weight, study shows », page 12.**

(73) Titulaire : **SOCIETE ANONYME AUTOMOBILES CITROEN**
**117 à 167, Quai André Citroen**
**F-75747 Paris Cedex 15 (FR)**
**AUTOMOBILES PEUGEOT**
**75, avenue de la Grande Armée**
**F-75116 Paris (FR)**

(72) Inventeur : **Pittoreau, Claude Jean**
**148, rue de Lourmel**
**F-75015 Paris (FR)**

(74) Mandataire : **Michardière, Bernard et ai**
**Cabinet Plasseraud 84, rue d'Amsterdam**
**F-75009 Paris (FR)**

Jouve, 18, rue St-Denis, 75001 Paris, France

## Porte pour véhicule, notamment pour automobile

L'invention est relative à une porte pour véhicule, notamment pour véhicule automobile, constituée par l'assemblage d'une pluralité d'éléments composites, et comprenant un cadre annulaire à voile transversal s'étendant suivant la périphérie de la porte et flanqué, latéralement, au-dessous du niveau du bas de glace d'un panneau intérieur, notamment en matière plastique, fixé sur le cadre et conformé de telle sorte qu'il permette d'assurer les fixations des accessoires habituels ou de manière à intégrer ces accessoires dans sa masse, et d'un panneau extérieur.

Le document FR-A-1 417 185 montre une porte de ce genre renforcée, dans sa partie basse, par une armature constituée par un jeu de poutres solidaires les unes des autres, auxquelles sont fixées des charnières de support et un élément d'un verrou. L'armature peut être reliée rigidement à une poutre creuse formant l'encadrement de la porte. Cette armature est enrobée, au moins en partie, par une mousse de matière plastique qui délimite à la fois la paroi extérieure et la paroi intérieure de la porte. Une feuille de revêtement extérieur en tôle ou matière plastique, peut être prévue ; la liaison de cette feuille de revêtement avec l'armature est assurée par le garnissage de mousse et aussi éventuellement par soudure ou collage avec l'armature. Cette feuille de revêtement peut être très mince car la présence de mousse empêche la transmission d'efforts à ladite feuille.

Il apparaît que la résistance d'une porte conforme à ce document antérieur est essentiellement basée sur l'armature ; la présence d'une telle armature complique la fabrication de la porte et alourdit sa construction.

L'invention a pour but, surtout, de rendre les portes du genre en question telles qu'elles ne présentent plus, ou à un degré moindre, les inconvénients évoqués ci-dessus et qu'elles forment un ensemble rigide mais qui reste léger et de fabrication rapide et simple. On souhaite, en outre, que les diverses parties formant la porte contribuent à la résistance et à la rigidité de cette porte.

Selon l'invention, une porte pour véhicule du genre défini précédemment est caractérisée par le fait que le panneau extérieur est formé par une paroi mince galbée au profil souhaité et fixée sur le cadre, et que ladite porte comporte en outre un encadrement annulaire extérieur, s'étendant suivant un contour fermé, propre à venir coiffer extérieurement la partie haute du cadre, au-dessus du niveau du bas de glace, cet encadrement annulaire étant agencé de manière à renforcer la partie haute du cadre s'étendant suivant le pourtour de glace, cet encadrement comprenant une entretoise horizontale s'étendant entre un montant avant et un montant arrière du cadre, au niveau du bas de glace.

La paroi extérieure fixée sur le cadre, et l'encadrement annulaire extérieur contribuent efficacement à la résistance de la porte.

Avantageusement, le cadre est réalisé en matière plastique notamment en matière couramment désignée par SMC (Sheet Molding Compound), ainsi que l'encadrement extérieur.

Le SMC est un matériau composite (plastique renforcé de fibres de verre) moulable sous forme de feuille.

De préférence, un renfort en fibre de carbone est interposé et fixé, notamment par collage, entre l'encadrement extérieur et la zone du cadre s'étendant suivant le pourtour de glace, ce renfort se terminant par une plage avant et arrière à la hauteur de l'entretoise de l'encadrement extérieur ; ce renfort en fibre de carbone est interposé sur tout ou partie de la surface de superposition des deux éléments précités.

Des renforts de fibre de carbone, ou des renforts d'acier, sont prévus en diverses parties du cadre, parties sur lesquelles sont aménagés des points d'attache, notamment pour les charnières et les tirants de porte.

La partie haute du cadre s'étendant suivant le pourtour de glace a une section transversale telle qu'elle forme un demi-profil d'encadrement de la glace, pour l'intérieur du véhicule, tandis que la partie de l'encadrement extérieur s'étendant suivant le même contour a une section transversale propre à former l'autre demi-profil d'encadrement de la glace.

Avantageusement, la section de la partie haute du cadre est sensiblement en L, tandis que la section de la partie de l'encadrement extérieur est en T.

Le cadre comporte une surépaisseur suffisante, vers l'intérieur, pour présenter une rainure, qui s'étend suivant un trajet comprenant les montants avant et arrière de porte et le bas de porte, destinée à former la partie femelle d'un joint d'assemblage avec le panneau intérieur qui, lui, porte une nervure formant la partie mâle de ce joint.

Le cadre comporte des points de fixation notamment formés par des inserts, destinés à permettre la fixation du panneau intérieur, ces inserts étant répartis sur le pourtour du cadre de manière à se trouver au plus près du joint d'assemblage, ces inserts étant avantageusement composés de plots filetés.

La partie formant entretoise, de l'encadrement extérieur, est nervurée au maximum tout en laissant place pour le logement de la poignée extérieure et pour une embase d'un rétroviseur, montée en insert au moment du moulage.

Le cadre peut être habillé, avant son montage sur chaîne, des charnières de porte, du support et tirant de porte et de leur renfort respectif et une demi-serrure et son pène ainsi que la tringlerie de liaison entre serrure et poignée extérieure sont montés sur ce cadre.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est une vue en élévation, avec parties arrachées, du cadre d'une porte selon l'invention, dont la partie haute est coiffée par l'élément extérieur d'encadrement.

La figure 2 est une coupe, à plus grande échelle suivant II-II, fig. 1, de la porte complète.

La figure 3 est une vue suivant la flèche III, fig. 1 de la porte complète.

La figure 4 est une coupe suivant IV-IV, fig. 1 de la porte complète.

La figure 5 est une section suivant V-V, fig. 1 de l'entretoise de l'élément extérieur d'encadrement.

La figure 6 est une coupe suivant VI-VI fig. 1 de la porte complète.

La figure 7 est une coupe suivant VII-VII, fig. 1 de la porte complète.

La figure 8 est une coupe suivant VIII-VIII, fig. 1.

La figure 9, enfin, est une coupe suivant IX-IX, fig. 1 de la porte complète.

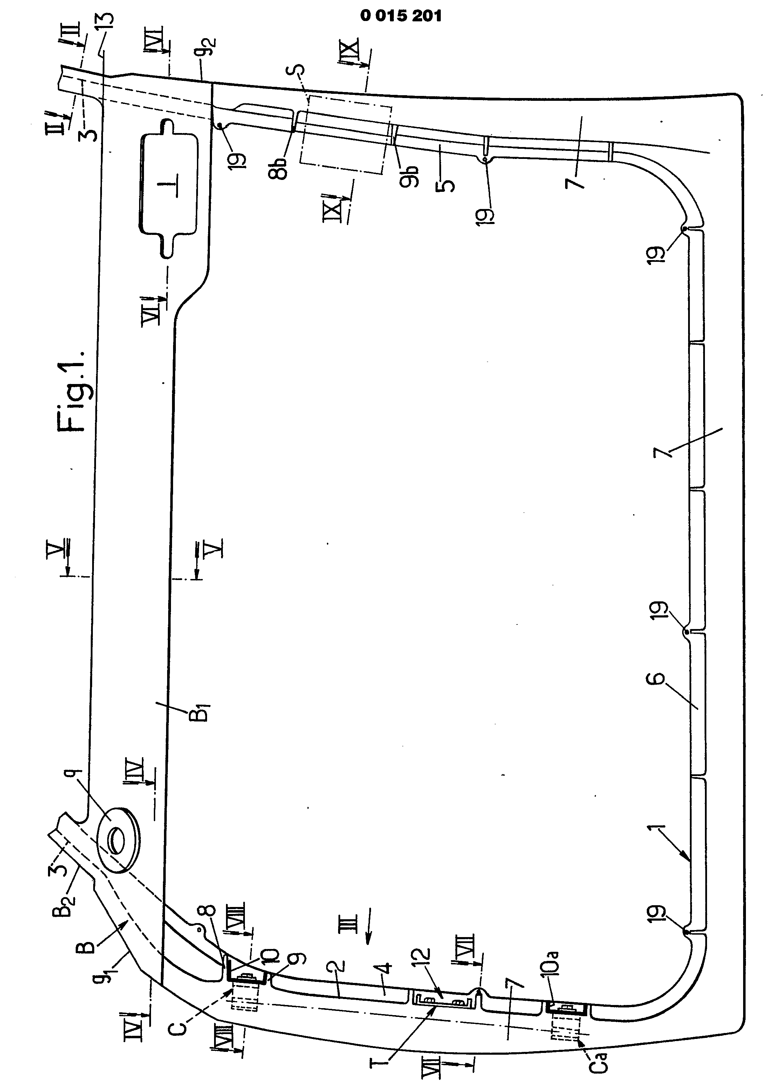

En se reportant aux dessins et plus précisément aux figures 1 à 3, on peut voir une porte P, pour véhicule automobile, qui comprend un cadre annulaire 1 de porte à voile 2 transversal formant entretoise. Ce cadre s'étend suivant la périphérie d'entrée de la porte dans la carrosserie du véhicule. La partie supérieure 3, de ce cadre, délimite l'ouverture de la fenêtre latérale ainsi que le pourtour de la glace en position haute ; seule une fraction de cette partie supérieure 3 est représentée sur la figure 1. Il est clair que cette partie supérieure s'étend sans interruption depuis la fraction gauche jusqu'à la fraction droite, seules représentées sur la fig. 1.

La partie inférieure du cadre comprend le montant avant 4 et le montant arrière 5 de porte ainsi que le bas 6 de porte.

Ce cadre 1 constitue l'élément médian de la porte. Le voile 2 est mince, nervuré et se développe suivant des génératrices sensiblement perpendiculaires au plan général de la porte ; ce voile 2 est prolongé, vers l'extérieur par rapport à la zone située à l'intérieur du cadre, par une paroi 7 formant un angle sensiblement droit avec le voile 2 et située sensiblement dans le plan de la paroi extérieure de la porte.

Ce cadre est avantageusement réalisé en matière plastique, notamment en SMC (Sheet Molding Compound).

Le SMC est une matière plastique renforcée de fibres de verre appartenant à la catégorie des thermodurcissables. Il se compose de résine polyester, de fibres de verre (orientées ou non) et de charges telles que du carbonate de calcium. Il peut être moulé sous forme de feuilles, sous compression par fluage, avec un flan froid sur un outil chaud.

Le cadre 1 est aménagé en différentes zones pour assurer la fixation de l'équipement traditionnel à savoir charnières C, Ca, tirant d'arrêt T et serrure S.

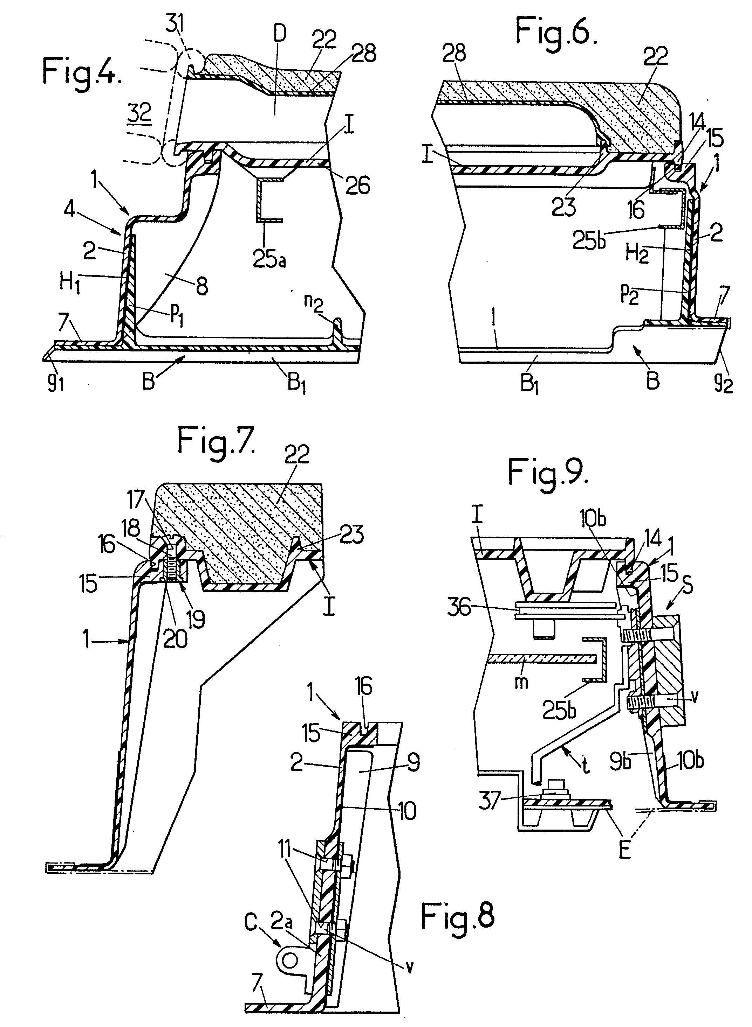

Comme visible sur les figures 1, 4 et 8, des nervures transversales 8 et 9, horizontales, sont prévues pour renforcer la zone du cadre servant à la fixation de la charnière supérieure C ; une lamelle de renfort en fibre de carbone 10 est collée, entre les nervures 8 et 9, contre le voile 2 et contre lesdites nervures ; les trous de fixation 11 pour la mise en place de cette charnière traversent la lamelle 10 comme visible sur la fig. 8.

La fixation de la charnière inférieure Ca et le renforcement du cadre 1 au niveau de cette fixation sont semblables au cas de la charnière C ; les éléments jouant des rôles analogues ont été désignés par les mêmes références numériques suivies de la lettre a. Il en est de même pour la fixation au niveau 12 du tirant de porte T.

Le montant arrière 5 de la porte peut être équipé d'une serrure S comme mieux visible sur la figure 9. Des renforts 10b en fibre de carbone sont collés contre le voile 2, de part et d'autre de ce voile, dans la région de la fixation de la serrure S, cette région étant munie de nervures de renforcement 8b, 9b.

La fixation des charnières, du tirant de porte et de la serrure est assurée par des vis v.

La porte P comprend un encadrement annulaire extérieur B, s'étendant suivant un contour fermé et propre à venir coiffer extérieurement la partie haute du cadre 1.

Cet encadrement B est agencé d'une part, de manière à renforcer la partie supérieure 3 du cadre 1, et d'autre part, de manière à comprendre une entretoise sensiblement horizontale B1 s'étendant entre le montant avant 4 et le montant arrière 5 du cadre de porte, vers le niveau 13 du bas de glace.

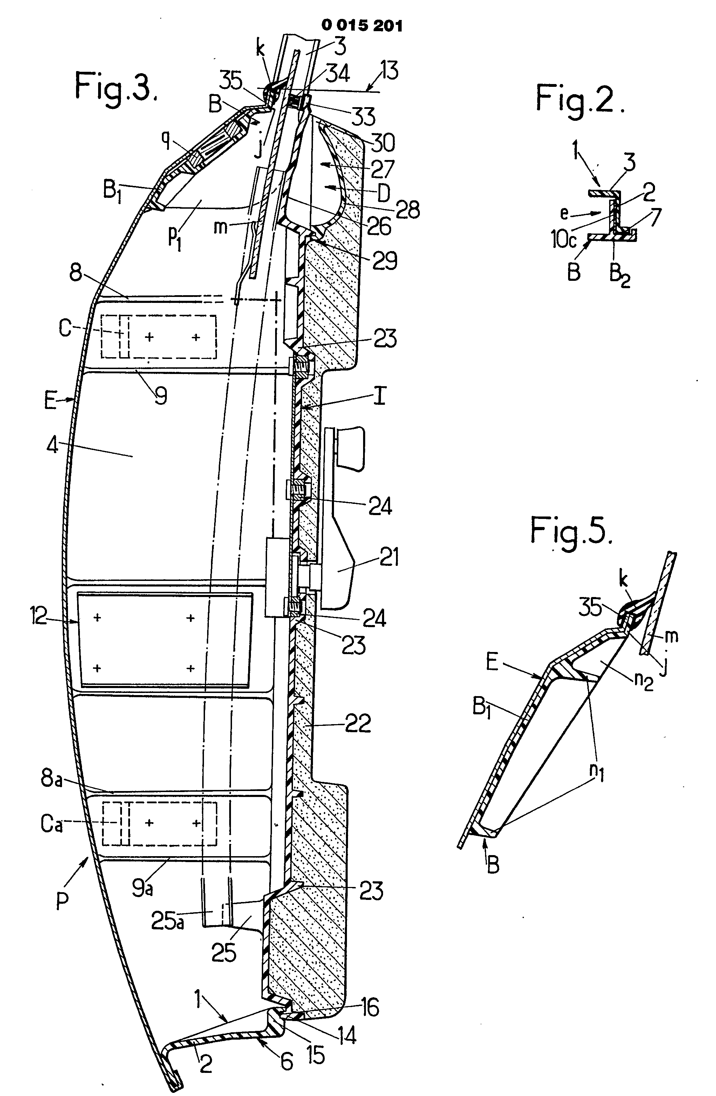

Pour renforcer la partie supérieure 3 du cadre, l'encadrement B présente une partie supérieure B2 (dont seules des portions inférieures avant et arrière sont montrées sur la fig. 1), s'étendant également suivant le pourtour de glace (lorsque la glace est en position haute) et qui vient s'appliquer sur la partie 3 du cadre 1 ; la partie B2 forme une demi-partie du profil d'encadrement de glace, complémentaire à celle formée par la partie 3, comme bien visible sur la figure 2. Ces deux parties sont imbriquées et réunies l'une à l'autre.

Avantageusement, la section transversale de la partie B2 a la forme d'un T qui est réuni, à la partie 3, à section sensiblement en L, comme montré sur la fig. 2, de telle sorte que la branche transversale du T soit tournée vers l'extérieur et que le profil d'encadrement e de la glace soit réalisé. D'après la fig. 2, il apparaît que la branche du L, de la section de la partie 3, sensiblement orthogonale au plan moyen de la porte forme le voile 2 et est prolongée par le retour 7 sensiblement à angle droit vers l'extérieur.

L'encadrement B forme une seule pièce avantageusement réalisée en matière plastique, notamment en SMC.

Un renfort en fibre de carbone 10c est interposé, comme visible sur la figure 2, entre la partie 3 et la partie B2 ; ce renfort 10c est fixé à l'ensemble par collage de manière à augmenter la résistance mécanique du profil d'encadrement e.

Ce renfort 10c a une section en L, comme visible sur la Fig. 2. Ce renfort se termine par deux plages respectivement H1 (fig. 4) sur le montant avant et H2 (fig. 6) sur le montant arrière 5 à la hauteur de l'entretoise B1. Le renfort 10c en fibre de carbone, ainsi collé à l'assemblage, est donc pris en sandwich entre le cadre de porte 1 et l'encadrement extérieur B.

Ce renfort en fibre de carbone est obtenu par moulage avec des fibres orientées de manière à lui conférer la meilleure résistance mécanique possible.

L'entretoise B1 est formée par une membrure comprenant des nervures de rigidification telles que n1 (fig. 5) situées dans un plan sensiblement horizontal et s'étendant longitudinalement et telles que n2 situées dans un plan transversal sensiblement vertical.

L'entretoise B1 comporte, au voisinage de ses deux extrémités, des plages étalées p1, p2 (fig. 3, 4 et 6), formant retour d'angle et constituées par des parois sensiblement orthogonales au plan moyen de la porte. Ces plages p1, p2, sont conformées de manière à venir épouser la surface intérieure du voile 2 du cadre 1, contre laquelle ces plages sont fixées par collage. La solidarisation du cadre 1 et de l'encadrement B se trouve ainsi renforcée. Il est à noter que les épanouissements H1, H2 du renfort de fibre de carbone 10c sont avantageusement pris en sandwich entre ces plages p1, p2 et le cadre 1.

L'entretoise B1 se prolonge, au-delà des plages p1, p2, de manière que les bords g1, g2 de ses extrémités épousent le contour extérieur de la zone voisine de la paroi 7 du cadre.

Cette entretoise B1 comporte une ouverture 1, pour le logement de la poignée extérieure, située au voisinage du montant arrière, et une embase q de rétroviseur montée en insert au moment du moulage de l'encadrement B.

La partie supérieure de l'entretoise B1 comporte, de moulage un bord franc j, (fig. 3 et 5) s'étendant, d'avant en arrière, et qui permet de monter le profilé k lèche-glace extérieur ; la glace m est partiellement représentée.

L'encadrement B présente une zone d'aspect évitant, éventuellement, la peinture sur la face extérieure de la partie B2 d'encadrement de glace et ce, jusqu'à la limite du bas de glace.

Le cadre 1 est flanqué bi-latéralement, au-dessous du niveau 13 (fig. 1 et 3) du bas de glace par un panneau extérieur E et par un panneau intérieur I.

Le panneau intérieur I (voir notamment fig. 3) est avantageusement réalisé en matière plastique, notamment en SMC et moulé sous compression par fluage. Ce panneau intérieur vient fermer le cadre de porte 1 entre le bas de glace et le bas de porte 6 ainsi qu'entre les montants avant 4 et arrière 5.

Ce panneau I comprend, venue de moulage sur son pourtour, une surépaisseur formant un rebord 14, perpendiculaire au plan moyen du panneau, et constituant la partie mâle du joint d'assemblage étanche de ce panneau avec le cadre 1 de la porte. Ce cadre comporte une surépaisseur 15 suffisante, vers l'intérieur, pour présenter une rainure 16 qui forme la partie femelle du joint d'assemblage et qui reçoit le rebord 14. Cette rainure 16, ainsi que le rebord 14 s'étendent suivant un trajet comprenant les montants avant 4 et arrière 5 ainsi que le bas de porte 6. Sur le pourtour du panneau I, et au plus près du rebord 14, sont prévues des ouvertures 17 (fig. 7) pour le passage de vis de fixation 18 du panneau I sur le cadre 1. Ce cadre comporte des points de fixation 19 (fig. 1 et 7) formés par des inserts répartis sur le pourtour du cadre, pour recevoir la partie filetée des vis 18. Ces inserts sont composés de plots filetés 20 pris dans la matière plastique lors du moulage du cadre.

Le panneau intérieur I est moulé sous forme de géométrie nervurée comme visible sur les dessins ; il est conçu pour assurer la mise en place et la fixation de garnitures et accessoires tels que la manivelle 21 (fig. 3) pour la commande de la montée ou de la descente de la glace, de la poignée (non visible) de commande intérieure d'ouverture ou de fermeture de la porte, de garnissages ornementaux 22, d'un accoudoir (non visible) etc.

La plupart de ces organes peuvent être avantageusement montés « hors chaîne » au moyen de centrages nervurés tel que 23 et d'inserts tels que 24 prévus dans le panneau intérieur I. Ces inserts sont disposés dans des bossages judicieusement répartis pour assurer les fixations ; sur la fig. 3, on peut voir, à la partie inférieure, un bossage 25 équipé d'un insert (non visible) permettant la fixation de la coulisse avant 25a de la glace m ; la coulisse arrière est désignée par 25b.

Le panneau I est, en outre, aménagé pour porter des agrafes permettant le montage du garnissage intérieur 22.

Ce panneau I peut présenter, à sa partie supérieure, une zone 26 (fig. 3), concave vers l'intérieur du véhicule, constituant une demi-coquille pour une busette de dégivrage 27 de la glace latérale m ; l'autre demi-coquille de cette busette est formée par la zone 28, concave vers l'extérieur, prévue à la partie supérieure du garnissage. Un joint étanche 29 est formé à la partie inférieure de la busette 27 lors de la réunion du panneau I et du garnissage 22, tandis qu'une fente 30 subsiste à la partie supérieure de la busette pour distribuer l'air chaud contre la partie inférieure de la glace latérale. La canalisation thermique D ainsi formée par la réunion des zones concaves 26 et 28 est raccordée, de manière étanche, par un joint mobile 31 (fig. 4) schématiquement représenté, à une arrivée d'air chaud 32 lorsque la porte est fermée.

La partie supérieure de la zone concave 26 forme un bord franc 33 permettant le montage du profilé 34, en matière élastomère, de lèche-glace intérieur.

Il convient de noter qu'un lève-glace électrique pourrait être monté sur ce panneau I si on le souhaitait.

Le panneau extérieur E complète le caisson de porte en venant coiffer l'ensemble situé au-dessous du niveau 13 de bas de glace ; ce panneau E peut être réalisé en feuille métallique mince, collée ou sertie sur le cadre 1 de porte. Il est également possible de réaliser le panneau extérieur E en matière plastique, notamment en SMC, collée sur le cadre de porte. Le panneau E assure la continuité du profilage et le premier barrage anti-choc sur le flanc.

Ce panneau E a un aspect extérieur peint ou teinté dans la masse, selon la matière utilisée, de manière à fermer et habiller le cadre de porte 1 à sa partie inférieure. Ce panneau E porte, à sa partie supérieure, située au voisinage du bas de glace 13, un bord 35 (fig. 3) qui est réuni au bord franc j de l'entretoise B1. Le lèche-glace extérieur k vient coiffer les deux bords 35 et j.

Le cadre 1 peut être équipé, avant son montage sur chaîne, des charnières de porte C, Ca, du support et du tirant de porte et des renforts respectifs. Ce cadre 1 peut également être équipé, « hors chaîne » de la demi-serrure S et de son pène ainsi que de la tringlerie de liaison t (fig. 9) entre cette serrure et la poignée extérieure. Les renforts en fibre de carbone (ou éventuellement en acier) sont collés dans les zones d'attache avant le montage sur chaîne. Un tel montage permet d'éviter l'habituel montage « en aveugle » des serrures ; selon l'invention, l'opération de montage de la demi-serrure sur le cadre 1 s'effectue avec une visibilité bi-latérale totale et un accès aisé au niveau de ce cadre.

Le panneau intérieur I, équipé des accessoires réglés, peut également être préparé « hors chaîne » puis, être monté, lors d'une opération sur la chaîne de montage, sur le cadre 1 de porte.

Le panneau extérieur E peut être assemblé au cadre de porte 1 « hors chaîne ». Sur la chaîne de montage, ce panneau recevra la poignée extérieure dans son logement I.

Comme visible d'après la figure 9, il est à noter que les attelages réciproques des ensembles cinématiques de liaison de commande interne 36 et externe 37 assurant l'action sur la serrure S sont automatiquement connectés au stade de l'assemblage des panneaux intérieur I et extérieur E avec le cadre 1.

On conçoit que la porte conforme à l'invention permet d'adapter au mieux les opérations de montage.

Il en résulte une simplification de la fabrication et du montage.

La porte, conforme à l'invention, forme un ensemble rigide, notamment grâce à l'entretoise B2 de l'encadrement B qui renforce la zone de la porte voisine de la ligne de ceinture soumise à des contraintes localisées notamment par suite de la fixation d'organes tels que rétroviseur externe, poignée de commande.

La porte conforme à l'invention présente, en outre, un bon confort acoustique et permet de bien insonoriser l'habitacle du véhicule.

Il est clair que le SMC a été donné comme exemple non limitatif de matériau pouvant être utilisé pour certains éléments de la porte.

Les caractéristiques générales des thermodurcissables sont plus favorables, y compris pour l'aspect que celles des thermoplastiques ; ces derniers, cependant, ont un temps de cycle beaucoup plus court que les thermodurcissables.

**Revendications**

1. Porte pour véhicule, notamment automobile, constituée par l'assemblage d'une pluralité d'éléments composites et comprenant un cadre annulaire (1) à voile transversal (2) s'étendant suivant la périphérie de la porte et flanqué, latéralement, au-dessous du niveau (13) du bas de glace d'un panneau intérieur (I), notamment en matière plastique, fixé sur le cadre et conformé de telle sorte qu'il permettre d'assurer les fixations des accessoires habituels ou de manière à intégrer ces accessoires dans sa masse, et d'un panneau extérieur (E), caractérisée par le fait que le panneau extérieur (E) est formé par une paroi mince galbée au profil souhaité et fixée sur le cadre et que ladite porte comporte en outre un encadrement annulaire extérieur (B), s'étendant suivant un contour fermé, propre à venir coiffer extérieurement la partie haute du cadre au-dessus du niveau (13) du bas de glace, cet encadrement annulaire étant agencé de manière à renforcer la partie haute (3) du cadre s'étendant suivant le pourtour de glace, cet encadrement comprenant une entretoise horizontale (B1) s'étendant entre un montant avant (4) et un montant arrière (5) du cadre, au niveau (13) du bas de glace.

2. Porte selon la revendication 1, caractérisée par le fait que le cadre (1), ainsi que l'encadrement extérieur (B) sont réalisés en matière plastique, notamment en SMC (Sheet Molding Compound).

3. Porte selon l'une quelconque des revendications précédentes, caractérisée par le fait qu'un renfort en fibre de carbone (10c) est interposé et fixé, notamment par collage, entre l'encadrement extérieur (B) et la partie (3) du cadre s'étendant suivant le pourtour de glace, ce renfort se terminant, notamment, par une plage avant (H1) et arrière (H2) à la hauteur de l'entretoise (B1) de l'encadrement extérieur.

4. Porte selon l'une quelconque des revendications précédentes, caractérisée par le fait que des renforts (10, 10a, 10b) de fibre de carbone ou d'acier, sont prévus en diverses parties du cadre, parties sur lesquelles sont notamment aménagés des points d'attache, en particulier pour les charnières (C) et le tirant de porte (T).

5. Porte selon l'une quelconque des revendications précédentes, caractérisée par le fait que la partie haute (3) du cadre s'étendant suivant le pourtour de glace a une section transversale telle qu'elle forme un demi-profil d'encadrement de la glace, pour l'intérieur du véhicule, tandis que la partie (B2) de l'encadrement extérieur (B) s'étendant suivant le pourtour de glace a une section transversale propre à former l'autre demi-profil d'encadrement de la glace.

6. Porte selon la revendication 5, caractérisée par le fait que la section de la partie haute (3) du cadre est sensiblement en L, tandis que la section de la partie (B2) de l'encadrement extérieur est en T.

7. Porte selon l'une quelconque des revendications précédentes, caractérisée par le fait que le cadre (1) comporte une surépaisseur (15) suffisante, vers l'intérieur, pour présenter une rainure (16) qui s'étend suivant un trajet comprenant les montants avant (4) et arrière (5) de porte et le bas (6) de porte, destinée à former la partie femelle d'un joint d'assemblage avec le panneau intérieur (I) qui, lui, porte une nervure (14) formant la partie mâle de ce joint.

8. Porte selon l'une quelconque des revendications précédentes, caractérisée par le fait que le cadre (1) comporte des points de fixation (19), notamment formés par des inserts, destinés à permettre la fixation du panneau intérieur, ces inserts étant répartis sur le pourtour du cadre de manière à se trouver au plus près du joint d'assemblage, ces inserts étant notamment composés de plots filetés (20).

9. Porte selon l'une quelconque des revendications précédentes, caractérisée par le fait que la partie (B1), formant entretoise, de l'encadrement extérieur (B), est nervurée au maximum, tout en laissant place pour le logement de la poignée extérieure et pour une embase (q) d'un rétroviseur, montée en insert au moment du moulage.

10. Porte selon l'une quelconque des revendications précédentes, caractérisée par le fait que le cadre (1) est habillé, avant son montage sur chaîne, des charnières de porte (C, Ca) du support et tirant de porte et de leur renfort respectif et qu'une demi-serrure (S) et son pêne ainsi que la tringlerie de liaison (t) entre serrure et poignée extérieure sont montés sur ce cadre.

**Claims**

1. A door for a vehicle, more particularly a motor vehicle, embodied by an assembly of composite elements and comprising a first frame (1) which is annular and which has a cross-member (2) extending around the door periphery and flanked laterally below the level (13) of the bottom of the window pane by an inner panel (I), *inter alia* of plastics, secured to the first frame (1) and shaped to enable the conventional accessories to be either secured to it or embodied in its mass, and by an outer panel (E), characterised in that the outer panel (E) takes the form of a thin wall curved to the required shape and secured to the first frame (1); and the door also comprises a second frame (B) which is annular and external, extends around a closed periphery adapted to cover externally the top part of the first frame (1) above the level (13) of the bottom window pane, the second frame (B) being adapted to strengthen the top part (3) of the first frame, the second frame (B) comprising a horizontal cross-member (B1) which extends between a front upright (4) and a rear upright (5) of the first frame (1) at the level (13) of the bottom of the window pane.

2. A door according to claim 1, characterised in that the first frame (1) and the outer frame (B) are made of plastics, *inter alia* of SMC (Sheet Moulding Compound).

3. A door according to any of the previous claims, characterised in that a carbon fibre reinforcement (10c) is interposed and secured, *inter alia* by sticking, between the outer frame (B) and the top part (3) of the first frame (1) and terminates *inter alia* in a front zone (H1) and a rear zone (H2) at the height of the cross-member (B1) of the second (outer) frame (B).

4. A door according to any of the previous claims, characterised in that carbon fibre or steel reinforcements (10, 10a, 10b) are disposed at various parts of the first frame, such parts comprising *inter alia* securing positions, *inter alia* for the door hinges (C) and door stay (T).

5. A door according to any of the previous claims, characterised in that the top part (3) of the first frame has a cross-section shaped as half a cross-section for the pane frame for the inside of the vehicle, whereas that part (B2) of the outer frame (B) which extends around the pane periphery has a cross-section shaped to form the other half-cross-section framing the pane.

6. A door according to claim 5, characterised in that the top part (3) of the first frame is in cross-section substantially L-shaped whereas the part (B2) of the outer frame (B) is in cross-section T-shape.

7. A door according to any of the previous claims, characterised in that the first frame (1) has sufficient overthickness (15) on the inside to present a groove (16) extending in a path comprising the front door upright (4) and the rear door upright (5) and the door bottom (6), such groove subsequently serving as the female part of an assembly joint with the inner panel (I), the same having a rib (14) serving as the male member of such joint.

8. A door according to any of the previous claims, characterised in that the first frame (1) has securing positions (19), embodied *inter alia* by inserts, for the securing of the inner panel, the inserts being distributed around the periphery of the first frame (1) so as to be very near the assembly joint, the inserts comprising *inter alia* screwthreaded studs (20).

9. A door according to any of the previous claims, characterised in that the cross-member part (B1) of the second (outer) frame (B) has a very large number of ribs while leaving sufficient space to receive the outside handle and the rear mirror base (q) which is disposed as an insert during moulding.

10. A door according to any of the previous claims, characterised in that the first frame (1) is provided, before its line assembly, with the door hinges (C, Ca), the support and door stay and their respective reinforcements, and a half-lock (S), its latch bolt and the connecting linkage (t) between the lock and the outside handle are disposed on the first frame (1).

## Ansprüche

1. Aus einer Mehrzahl von zusammengesetzten Elementen bestehende Tür für Fahrzeuge, insbesondere für Kraftfahrzeuge, mit einem ringförmigen Querschalen-Rahmen (1, 2), der sich längs der Umfangslinie der Tür erstreckt und seitlich unterhalb des unteren Scheibenniveaus (13) mit einer äußeren Füllung (E) und einer inneren Füllung (I) abgedeckt ist, wobei die vorzugsweise aus Kunststoff bestehende innere Füllung an dem Rahmen befestigt und derart ausgebildet ist, daß sie die Befestigung der üblichen Zubehörteile oder die Integration dieser Zubehörteile in ihre Masse ermöglicht, dadurch gekennzeichnet, daß die äußere Füllung (E) aus einer dünnen ausgebauchten Wandung mit dem gewünschten Profil besteht und an dem Rahmen befestigt ist und daß die Tür ferner ein ringförmiges äußeres Rahmenteil (B) besitzt, welches längs einer geschlossenen Kontur verläuft und den oberen Teil des Rahmens oberhalb des unteren Scheibenniveaus (13) außen abdeckt, daß das ringförmige Rahmenteil (B) derart ausgebildet ist, daß es den längs der Umfangslinie der Scheibe verlaufenden oberen Teil (3) des Rahmens verstärkt, und daß das Rahmenteil (B) eine horizontale Querstrebe (B1) umfaßt, die sich auf dem unteren Scheibenniveau (13) zwischen einem vorderen (4) und einem hinteren Ständerteil (5) des Rahmens erstreckt.

2. Tür nach Anspruch 1, dadurch gekennzeichnet, daß der Rahmen (1) sowie das äußere Rahmenteil (B) aus Kunststoff, insbesondere aus SMC (Sheet Molding Compound) bestehen.

3. Tür nach einem der vorhergehenden Ansprüche, dadurch gekennzeichnet, daß zwischen dem äußeren Rahmenteil (B) und dem längs der Umfangslinie der Scheibe verlaufenden Teil (3) des Rahmens ein Verstärkungsteil (10c) aus Carbonfasern eingefügt und vorzugsweise durch Kleben fixiert ist und daß dieses Verstärkungsteil in der Höhe der Querstrebe (B1) des äußeren Rahmenteils in einer vorderen (H1) und einer hinteren Abflachung (H2) endet.

4. Tür nach einem der vorhergehenden Ansprüche, dadurch gekennzeichnet, daß Verstärkungsteile (10, 10a, 10b) aus Carbonfaser oder Stahl an verschiedenen Teilen des Rahmens, insbesondere an solchen Teilen, vorgesehen sind, an denen Befestigungspunkte, insbesondere für die Scharniere (C) und den Türständer (T) angebracht sind.

5. Tür nach einem der vorhergehenden Ansprüche, dadurch gekennzeichnet, daß der obere Teil (3) des Rahmens, der sich längs der Umfangslinie der Scheibe erstreckt, eine solche Querschnittsgestalt aufweist, daß sie ein dem Wageninneren zugeordnetes Halbprofil für die Scheibeneinfassung bildet, während der Teil (B2) des äußeren Rahmenteils (B), der sich längs der Umfangslinie der Scheibe erstreckt, eine Querschnittsgestalt aufweist, die sich zur Bildung des anderen Halbprofils der Scheibeneinfassung eignet.

6. Tür nach Anspruch 5, dadurch gekennzeichnet, daß der Querschnitt des oberen Teils (3) des Rahmens im wesentlichen L-förmig ist, während der Querschnitt des genannten Teils (B2) des äußeren Rahmenteils T-förmig ist.

7. Tür nach einem der vorhergehenden Ansprüche, dadurch gekennzeichnet, daß der Rahmen (1) nach innen eine Materialzugabe (15) aufweist, welche ausreichend groß ist, um eine Nut (16) aufzunehmen, die längs einer Strecke verläuft, die den vorderen (4) und den hinteren Türständer (5) sowie die Unterseite (6) der Tür umfaßt, und daß diese Nut (16) den Aufnahmeteil einer Fügeverbindung mit der inneren Füllung (I) bildet, die ihrerseits eine Rippe (14) trägt, welche das Gegenstück dieser Verbindung bildet.

8. Tür nach einem der vorhergehenden Ansprüche, dadurch gekennzeichnet, daß der Rahmen (1) Befestigungspunkte (19) umfaßt, die vorzugsweise von Einsatzstücken gebildet sind und die die Befestigung der inneren Füllung ermöglichen, und daß diese Einsatzstücke vorzugsweise aus mit Gewinden versehenen Hülsen (20) bestehen und derart über den Umfang des Rahmens verteilt sind, daß sie so nah wie möglich an der genannten Fügeverbindung liegen.

9. Tür nach einem der vorhergehenden Ansprüche, dadurch gekennzeichnet, daß der die Querstrebe bildende Teil (B1) des äußeren Rahmenteils (B) mit einem Maximum an Rippen versehen ist, wobei Raum gelassen ist für die Aufnahme des äußeren Türgriffs und ein Ansatzteil (q) für einen Rückspiegel, welches als Einsatz beim Spritzgußvorgang montiert ist.

10. Tür nach einem der vorhergehenden Ansprüche, dadurch gekennzeichnet, daß der Rahmen (1) vor seiner Montage auf dem Montageband mit Türscharnieren (C, Ca), Türpfosten und Türständer und der jeweiligen Verstärkung versehen wird, und daß ein Halbschloß (S) und dessen Riegel sowie das Verbindungsgestänge (t) zwischen Schloß und äußerem Türgriff an dem Rahmen vormontiert werden.

Fig.1.

0 015 201

Fig.3.

Fig.2.

Fig.5.

Fig.4.

Fig.6.

Fig.7.

Fig.9.

Fig.8